Europäisches Patentamt

European Patent Office

Office européen des brevets

(19)

(11) Veröffentlichungsnummer: **0 088 148**
A2

## (12) EUROPÄISCHE PATENTANMELDUNG

(21) Anmeldenummer: 82105677.7

(22) Anmeldetag: 26.06.82

(51) Int. Cl.³: **B 01 D 27/08**

(30) Priorität: 04.03.82 DE 8205983 U

(71) Anmelder: **Zimmer, Cornelius P., Sürst 9, D-5308 Rheinbach (DE)**

(43) Veröffentlichungstag der Anmeldung: 14.09.83 **Patentblatt 83/37**

(72) Erfinder: **Zimmer, Cornelius P., Sürst 9, D-5308 Rheinbach (DE)**

(84) Benannte Vertragsstaaten: **AT BE CH DE FR GB IT LI NL SE**

(74) Vertreter: **Patentanwaltsbüro Cohausz & Florack, Postfach 14 01 47, D-4000 Düsseldorf 1 (DE)**

(54) **Filter.**

(57) Die Erfindung betrifft ein Filter, insbesondere zum Aufarbeiten von Öl, mit einer zylindrischen, auswechselbaren Filterhülse und mit außen um die Filterhülse befestigtem Filtermaterial. In die Filterhülse (19) ist eine elastische Hülse (9) einsteckbar, deren Außendurchmesser im entspannten Zustand nur wenig geringer ist als der Innendurchmesser der Filterhülse (19) und deren Außenumfang durch den im Inneren der elastischen Hülse (9) angelegten Druck der zu filternden Flüssigkeit erweiterbar ist.

0088148

— 1 —

Filter

Die Erfindung betrifft ein Filter, insbesondere zum Aufarbeiten von Öl, mit einer zylindrischen Filterhülse und mit außen um die Filterhülse befestigtem Filtermaterial.

Es ist insbesondere bei Kraftfahrzeugen bekannt, das im Motortriebwerk befindliche Öl durch einen Papierfilter, insbesondere eine auswechselbare Papierfilterpatrone, von Schmieröl, Alterungsprodukten und aufgenommenen Fremdstoffen zu befreien. Diese bekannten Filterpatronen weisen eine Filterhülse auf, die von einer Filterpapierwicklung umgeben ist. Die Filterhülse muß ausreichend dickwandig sein, um die Papierwicklung ausreichend zu stützen. Damit das Öl durch die Filterhülse fließen kann, weist diese in gleichmäßigen Abständen Öffnungen auf. Das Einbringen solcher Öffnungen in die Filterhülse ist aufwendig, so daß es die Herstellung verteuert.

Aufgabe der Erfindung ist es, ein Filter der eingangs genannten Art derart zu verbessern, daß die Filterhülse dünnwandig und preiswert sein kann.

36 106 EU
HC/Be

Diese Aufgabe wird erfindungsgemäß dadurch gelöst, daß in die Filterhülse eine elastische Hülse einsteckbar ist, deren Außendurchmesser im entspannten Zustand nur wenig geringer ist als der Innendurchmesser der Filterhülse und deren Form durch den im Inneren der elastischen Hülse angelegten Druck diese Form zu stabilisieren.

Eine solche Hülse des Filters bedarf keiner Stützfunktion mehr, da hierfür die elastische Hülse vorgesehen ist. Die Filterhülse kann damit äußerst dünnwandig sein. Vorzugsweise wird vorgeschlagen, daß der Außenumfang der elastischen Hülse Ausnehmungen, insbesondere Nuten aufweist, die die gefilterte Flüssigkeit abführen und in deren Bereich übereinstimmende Bereiche der Filterhülse Bruchstellen bilden, durch die die Flüssigkeit vom Filtermaterial zum Ausgang fließt.

Eine solche Filterhülse benötigt keine zuvor angebrachten Öffnungen mehr, sondern diese werden durch die innere elastische Hülse nach dem Einsetzen der Filterhülse selbsttätig erzeugt. Der Herstellungsaufwand ist hierdurch wesentlich geringer, und es wird darüber hinaus eine optimale Verteilung verhältnismäßig großer Durchflußöffnungen in der Filterhülse erzeugt.

Von besonderem Vorteil ist es, wenn die Ausnehmungen oder Nuten achsparallel zur Filterhülsenachse verlaufen. Hierdurch erfolgt eine gleichmäßige Strömung der zu filternden Flüssigkeit, insbesondere zum Ausgang hin.

Vorzugsweise wird vorgeschlagen, daß die Bereiche der elastischen Hülse zwischen den Ausnehmungen Rippen bilden. Dabei können die Rippen scharfkantig sein und insbesondere scharfkantige Teile wie Messer tragen, so daß

0088148

- 3 -

auch dickwandigere Filterhülsen oder Hülsen aus härterem
Material durchstoßen werden. Insbesondere wird das Material der Filterhülse durch die zu filtendernde Flüssigkeit erweicht.

Ein leichtes Ein- und Ausbringen der Filterpatrone als auch
ein sicheres partielles Durchstoßen der Filterhülsenwandung wird dadurch erreicht, daß die elastische Hülse
innen durch die zu filternde Flüssigkeit gefüllt und durch
deren Druck erweiterbar ist.

Vorzugsweise wird vorgeschlagen, daß das untere Ende der
Gummihülse eine Stirnwand mit mittiger Öffnung trägt, die
im eingesetzten Zustand von einem keine Öffnungen aufweisenden Bereich oder Vorsprung des Filtergehäuse, insbesondere eines Siebes, geschlossen ist und durch Abnahme des
Filtergehäusedeckels geöffnet wird. Durch eine solche Anordnung wird erreicht, daß der Flüssigkeitsdruck im Inneren der elastischen Hülse sofort nach Öffnen einer Filtervorrichtung abnimmt, so daß die elastische Hülse im Umfang
kleiner wird und die Filterhülse leicht entnommen werden
kann.

Von besonderem Vorteil ist es, wenn die elastische Hülse
im oberen Bereich auf der Außenseite einen konischen,
sich nach unten verjüngenden Kragen aufweist, der an der
Innenwandung der Filterhülse dichtend anliegt.

Ein Ausführungsbeispiel der Erfindung ist in den Zeichnungen dargestellt und wird im folgenden näher beschrieben. Es zeigen:

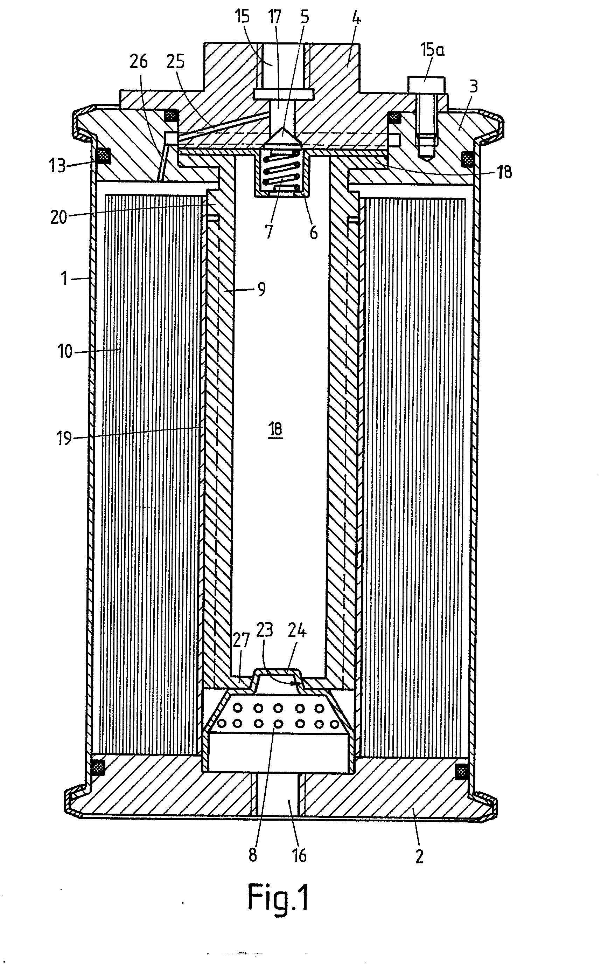

Fig. 1    einen Längsschnitt durch eine Filtervorrichtung;

- 4 -

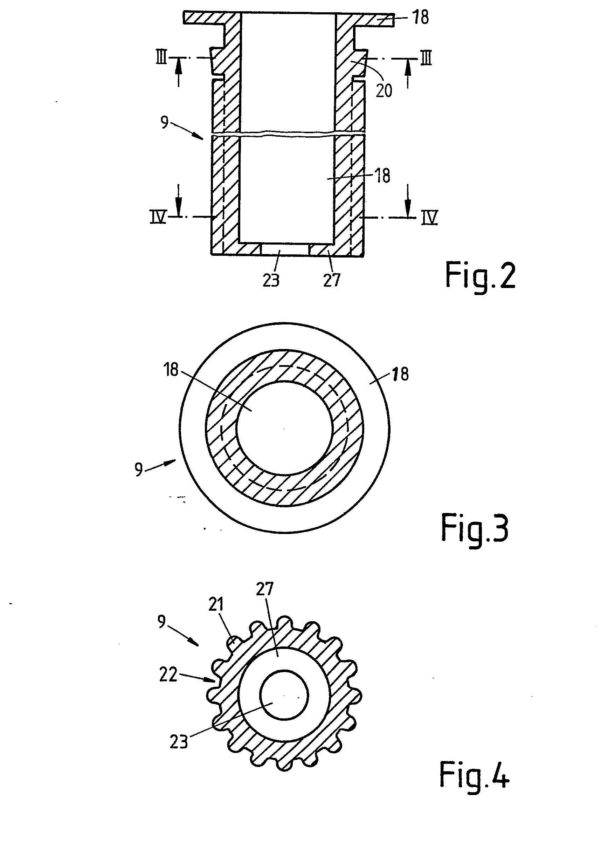

Fig. 2 einen Längsschnitt durch die elastische Hülse;

Fig. 3 einen Schnitt nach III-III in Fig. 2; und

Fig. 4 einen Schnitt nach IV-IV in Fig. 2.

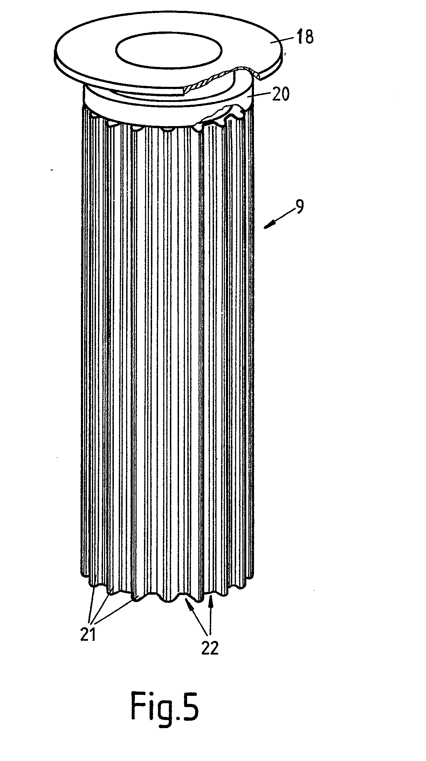

Fig. 5 eine perspektivische Darstellung der elastischen Hülse.

Ein zylindrisches Filtergehäuse 1 mit unterem kreisförmigem Boden 2 weist einen oberen kreisförmigen, abnehmbaren Deckel 3 mit koaxialem Einsatz 4 auf. Der Einsatz 4 ist durch Schrauben 15a am Deckel 3 befestigt. Der Boden 2 besitzt einen mittigen Auslaß 16 und der Einsatz 4 einen mittigen Einlaß 15, an die Leitungen anschließbar sind, die einen Nebenölstrom bei einem Kraftfahrzeugmotor bilden können. Unterhalb des Einlasses 15 ist am Einsatz 4 ein Ventil befestigt, dessen Ventilkegel 5 eine Leitung 17 verschließt, die den Einlaß 15 mit einem koaxialen zylindrischen Innenraum 18 verbindet, der vom Inneren einer elastischen, zylindrischen, koaxialen Hülse 9 insbesondere aus Gummi gebildet wird. Die elastische Hülse 9 ist am Einsatz 4 mit einem flanschförmigen, angeformten Abdichtungsring 18 abgedichtet befestigt und auch an der Unterseite dicht, so daß ein den Ventilkegel 5 öffnender Öldruck die elastische Hülse radial weitet. Die Hülse 9 ist von einem Papierfilter umgeben, mit einer an der Hülse 9 außen anliegenden Filterhülse 19 aus Papier oder Pappe und einem auf die Filterhülse aufgebrachten, filternden Papierwickel 10.

Die aus dehnbarem Gummi bestehende Hülse 9 ist an ihrer Außenwandung mit erhöhten Längsrippen 21 versehen, die zwischen sich in regelmäßigen Abständen Nuten 22 bilden.

Unterhalb des oberen Abdichtungsringes 18 ist außen an der Hülse 9 ein konischer Kragen 20 als fester Bestandteil der Hülse 9 so vorgesehen, daß dieser sich leicht in die Hülse 19 einführen läßt. Der Kragen 20 dient zur Abdichtung gegen die Papphülse 19, was durch den von außen wirkenden Öldruck geschieht, der sich gegen den inneren Öldruck der Hülse 9 ausgleicht.

Unterhalb des Gummikragens 20 verlaufen die Nuten 22 entlang der Hülse 9 nach unten. Am unteren Ende der Hülse 9 ist in ihrer Stirnwand 27 eine Öffnung 23 vorgesehen, die durch einen koaxialen Vorsprung 24 eines Siebkörpers 8 verschlossen ist und so die Hülse 9 nach unten gegen das geformte Sieb 8 abdichtet, da der Vorsprung 24 keine Sieböffnungen aufweist. Der Gummibehälter 9 ist im Deckel 3 mittels Einsatz 4 fest gelagert und wird zusammen mit einer Ronde 6 mittels Schraubendruck durch den Einsatz 4 abgedichtet. Die Ronde 6 ist zur Aufnahme einer leichten Druckfeder 7 nach unten erweitert geformt, die ihrerseits den Ventilkegel 5 unter leichtem Druck in Schließrichtung hält.

Der Papierwickel 10 ist auf die 1 mm starke Wandung der Hülse 19 aufgebracht. In diese Hülse 19 wird die Hülse 9 eingeführt, bis diese sich auf das geformte Sieb 8 aufsetzt. In dieser Lage befindet sich der obere konische Gummikragen der Hülse 9 im oberen Teil der Hülse 19.

Das vom Einlaß 15 einströmende Öl öffnet den Ventilkegel 5 und füllt das Innere 18 der Hülse, bis der innere Druck das Ventil 5 schließt. Die Hülse 9 ist jetzt durch den inneren Öldruck so ausgedehnt, daß die Hülse 19

- 6 -

oben und unten, sowie über die Rippen 21, an dem Umfang der Hülse 9 abgedichtet ist. Durch das Anlehnen der Hülse 9 gegen die Innenseite der Hülse 19 entstehen demnach längslaufende Kanäle, die teils durch die Hülse 9 und die Hülse 19 gebildet werden.

Die nur 1 mm starke Pappwandung der Hülse 19 bildet über die Nuten 22 der Hülse 9 Schwachstellen, die noch weiter durch erweichenden Einfluß des Öls geschwächt werden. Diese Schwachstellen werden durch den Druck des einfließenden Öls durchbrochen, so daß das Öl folgenden Weg nehmen kann. Vom Einlaß 15 über die Leitung 17 und über eine von der Leitung 17 abzweigende Leitung 25, 26 zur Außenseite des Papierwickels 10. Durch den Papierwickel 10 und die Bruchstellen der Hülse 19 hindurch, entlang den Längskanälen der Hülse 9, durch das sich im Boden befindliche Sieb 8 zum Bodenauslaß 16.

Eine zusätzliche Hilfe, den Durchbruch in den Schwachstellen der Hülse 19 zu erleichtern, wäre dadurch erreichbar, daß Messer in den Rippen 21 der Hülse 19 eingegossen werden, die zusätzlich die Hülsenwandung einschneiden würden.

Beim Auswechseln der Filterpatrone, Papierwickel 10, muß der Deckel 3, der mittels eines O-Rings 13 das Filtergehäuse abdichtet, abgehoben werden. Da der Deckel 3 mit der Gummihülse 9 fest verschraubt ist, hebt sich die Gummihülse 9 von ihrem Bodensitz (Sieb 8) ab. Folglich fällt der Öldruck in der Gummihülse 9 auf Null, die Hülse 9 entleert sich des Öls und kontrahiert auf ihre ursprüngliche Form zurück. Dadurch wird die Filterpatrone 10 zum Auswechseln freigegeben.

## Ansprüche

1. Filter, insbesondere zum Aufarbeiten von Öl, mit einer zylindrischen, auswechselbaren Filterhülse und mit außen um die Filterhülse befestigtem Filtermaterial, d a d u r c h   g e k e n n z e i c h n e t , daß in die Filterhülse eine elastische Hülse (9) einsteckbar ist, deren Außendurchmesser im entspannten Zustand nur wenig geringer ist als der Innendurchmesser der Filterhülse (19) und deren Außenumfang durch den im Inneren der elastischen Hülse (9) angelegten Druck der zu filternden Flüssigkeit erweiterbar ist.

2. Filter nach Anspruch 1, d a d u r c h   g e k e n n - z e i c h n e t , daß der Außenumfang der elastischen Hülse (9) Ausnehmungen, insbesondere Nuten (22), aufweist, die die gefilterte Flüssigkeit abführen und in deren Bereich übereinstimmende Bereiche der Filterhülse (19) Bruchstellen bilden, durch die die Flüssigkeit vom Filtermaterial (10) zur Ausnehmung fließt.

3. Filter nach Anspruch 1 oder 2, d a d u r c h   g e - k e n n z e i c h n e t , daß die Ausnehmungen oder Nuten (22) achsparallel zur Filterhülsenachse oder schraubenförmig verlaufen.

36 106 EU
HC/Be

4. Filter nach einem der Ansprüche 1 bis 3, d a d u r c h g e k e n n z e i c h n e t , daß die Bereiche der elastischen Hülse (9) zwischen den Ausnehmungen Rippen (21) bilden.

5. Filter nach Anspruch 4, d a d u r c h  g e k e n n - z e i c h n e t , daß die Rippen (21) scharfkantig sind und insbesondere scharfkantige Teile wie Messer tragen.

6. Filter nach einem der Ansprüche 1 bis 5, d a d u r c h g e k e n n z e i c h n e t , daß das Material der Filterhülse (19) durch die zu filternde Flüssigkeit erweichbar ist.

7. Filter nach einem der Ansprüche 1 bis 6, d a d u r c h g e k e n n z e i c h n e t , daß die elastische Hülse (9) innen durch die zu filternde Flüssigkeit gefüllt und durch deren Druck erweiterbar ist.

8. Filter nach einem der Ansprüche 1 bis 7, d a d u r c h g e k e n n z e i c h n e t , daß das untere Ende der Gummihülse (9) eine Stirnwand (27) mit mittiger Öffnung (23) trägt, die im eingesetzten Zustand von einem keine Öffnungen aufweisenden Bereich oder Vorsprung (24) des Filtergehäuses, insbesondere eines Siebes (8) geschlossen ist und durch Abnahme des Filtergehäusedeckels (3) geöffnet wird.

9. Filter nach einem der Ansprüche 1 bis 8, d a d u r c h g e k e n n z e i c h n e t , daß die elastische Hülse (9) im oberen Bereich auf der Außenseite einen konischen, sich nach unten verjüngenden Kragen (20) aufweist, der an der Innenwandung der Filterhülse (19) dichtend anliegt.

0088148

Fig.1

Fig.2

Fig.3

Fig.4

0088148

Fig.5